**Europäisches Patentamt**

**European Patent Office**

**Office européen des brevets**

(19)

(11) Veröffentlichungsnummer: **0 110 247**
**A1**

(12) ## EUROPÄISCHE PATENTANMELDUNG

(21) Anmeldenummer: **83111491.3**

(22) Anmeldetag: **17.11.83**

(51) Int. Cl.³: **G 01 D 11/30**

(30) Priorität: **22.11.82 DE 3243098**

(43) Veröffentlichungstag der Anmeldung: **13.06.84**
Patentblatt 84/24

(84) Benannte Vertragsstaaten: **IT**

(71) Anmelder: **Rheinische Braunkohlenwerke AG.,
Stüttgenweg 2, D-5000 Köln 41 (DE)**

(72) Erfinder: **Bellgardt, Dieter, Dipl.-Ing., St. Pauli 5,
D-2154 Apensen (DE)**
Erfinder: **Bauer, Werner, Prof. Dr.-Ing., St. Pauli 5,
D-2154 Apensen (DE)**
Erfinder: **Werther, Joachim, Prof. Dr.-Ing., Tostedter
Weg 39, D-2110 Buchholz (DE)**
Erfinder: **Ritter, Günter, Dr.-Ing., Goethestrasse 29,
D-5040 Brühl (DE)**

(74) Vertreter: **Koepsell, Helmut, Dipl.-Ing., Mittelstrasse 7,
D-5000 Köln 1 (DE)**

(54) **In einen Reaktionsbehälter hineingeführtes Sondenrohr zur Ermittlung des Betriebszustandes eines Mediums.**

(57) Ein in einen Reaktionsbehälter hineingeführtes Sondenrohr zur Messung des Betriebszustandes eines Mediums im Inneren des Behälters weist eine erste Abdichtung auf, die temperaturfest ist und eine zweite Abdichtung, die druckfest und gasdicht ist. Mit diesen Abdichtungen werden das innere bzw. äußere Ende des Sondenrohres jeweils verschlossen. Über eine Öffnung steht der Innenraum des Sondenrohres mit dem Innenraum des Reaktionsbehälters in Verbindung, wodurch die temperaturfeste Abdichtung an der Spitze des Sondenrohres von Druckkräften entlastet wird.

**DIPL.-ING. HELMUT KOEPSELL**

PATENTANWALT

5 KÖLN 1

Mittelstrasse 7
Telefon (02 21) 21 94 23
Telegrammadresse: Koepsellpatent Köln

0110247

Rheinische Braunkohlenwerke AG.

Ri/125

Reg.-Nr. bitte angeben

In einen Reaktionsbehälter einführbares Sondenrohr zur Ermittlung des Betriebszustandes eines Mediums

Die vorliegende Erfindung betrifft ein in einen Reaktionsbehälter einführbares Sondenrohr zur Ermittlung des Betriebszustandes eines im Inneren des Behälters befindlichen festen, flüssigen oder gasförmigen Mediums, welches ggf. unter Druck und/oder Temperatur steht. Das Sondenrohr weist an seinem unteren Ende einen Meßfühler auf, welcher das Ende von Meßleitungen darstellt, die durch den Hohlraum des Sondenrohres hindurchgeführt und am oberen Ende desselben herausgeführt sind. Das Sondenrohr ist üblicherweise mit einer Abdichtung versehen, welche die Meßleitungen dichtend umgibt, so daß das der Ermittlung des Betriebszustandes jeweils unterworfene Medium aus dem Inneren des Behälters nicht über das Sondenrohr austreten kann. Derartige Sonden arbeiten nach unterschiedlichen Meßprinzipien, beispielsweise mit elektrischen Leitern oder optischen Fasern.

Mit Sondenrohren der genannten Art wird beispielsweise der Betriebszustand von festkörperartigen Schüttgütern in einem Behälter ermittelt, so z. B. die Entwicklung von Gasen wie Kohlendioxid ($CO_2$) oder Methan ($CH_4$) in einem Braunkohlenstaub enthaltenden Reaktor oder anderen Behältern. Derartige Behälter stehen üblicherweise nicht unter Druck und die Temperaturen im Behälterinneren liegen nicht wesentlich über der Umgebungstemperatur.

Aber auch der Betriebszustand innerhalb von Vergasungsreaktoren von der Art der Hochtemperatur-Winkler (HTW) oder zur hydrierenden Kohlevergasung (HKV) kann mit Sondenrohren gemessen werden, indem Art und Menge der Gase von im Wirbelbett vergasten feststoffartigen Kohlepartikeln bestimmt werden. Temperaturen und Drücke liegen hierbei erheblich über dem Umgebungsniveau. Sondenrohre der genannten Art werden auch in Reaktionsgefäßen eingesetzt bei der hydrierenden Verflüssigung von kohlenstoffhaltigem Material; hier liegen Temperaturen im Bereich zwischen 300° C und 500° C und Drücke zwischen 100 und 500 bar vor.

Der Zustand des Mediums im Inneren des Behälters reicht von dünnflüssiger bis zur pastösen Konsistenz, aber es herrschen gleichzeitig auch gasförmige Zustände.

Mit Hilfe von Meßsonden, die während des Betriebes in einen Reaktionsbehälter von der zuletzt genannten Art eingeführt werden, will man beispielsweise Aufschluß erhalten über die fluiddynamischen Zustände, d. h. die Größe und Geschwindigkeit der Blasen von eingeleiteten oder entstehenden Gasen. Daneben sollen mit Hilfe von Sonden Aufschlüsse gewonnen werden über den Anteil der Gasphase in dem flüssigen Medium sowie der Größenverteilung der Blasen.

Hierzu werden zwei Meßleitungen, beispielsweise optische Fasern, parallel zueinander liegend durch die Länge des Sondenrohres hindurch und an seinem unteren Ende zu einem Meßfühler zusammengeführt, während sie am oberen Ende des Sondenrohres, das aus dem Reaktionsbehälter herausragt, hinausgeführt und mit den geeigneten Meßinstrumenten verbunden sind. Durch die erste derartige optische Faser wird beispielsweise ein Laserlicht geleitet und durch die andere optische Faser zurückgeleitet. Gasblasen, die auf den Meßfühler auftreffen, reflektieren einen Teil des einfallen- den Laserlichtes, so daß es über die herausgeführte Meßleitung erfaßt werden kann. Die Häufigkeit und Intensität
der Reflektionen ist beispielsweise ein Maß für die in dem
flüssigen Medium gelöste Gasphase.

Ein Meßfühler der vorbeschriebenen Art ist sehr empfindlich
und muß vor Beschädigungen und sonstigen mechanischen
Einwirkungen, z. B. Druckkräften, geschützt werden. Auch ist
es erforderlich, die Durchführung der Meßleitungen durch das
Sondenrohr so gasdicht auszuführen, daß das in dem Reaktionsbehälter befindliche Medium nicht austreten kann.
Hierzu hat man Vergußmassen vorgesehen, womit der Innenraum
des Sondenrohres ausgegossen wird, so daß die Meßleitungen
in dieser Vergußmasses allseitig eingebettet sind, während
die Vergußmasse für die erforderlichen Abdichtungen zu
sorgen hat. Es hat sich jedoch gezeigt, daß bekannte
Vergußmassen nicht allen Anforderungen an die Dichtigkeit
genügen, die sich aus den Reaktionsbedingungen im Inneren
des Behälters ergeben. So ist es beispielsweise möglich, mit
Hilfe eines Zweikomponenten-Klebers eine Vergußmasse
herzustellen, die zwar temperaturfest, aber nicht ausreichend druckfest und gasdicht ist. Eine Vergußmasse, die
allen drei Bedingungen, nämlich hohe Temperaturfestigkeit z.
B. über 300° C, hohe Druckfestigkeit z. B. über 100 bar und
große Gasdichtheit insbesondere gegenüber niedermolekularen
Gasen wie Wasserstoff ($H_2$) oder Helium (He) gleichzeitig
genügt, gibt es nicht.

Das führt deshalb häufig zu einer einseitigen Druck- und
erhöhen Temperaturbelastung auf dem Meßfühler mit dem
Ergebnis, daß dieser in das Innere des Sondenrohres hineingedrückt und gasdurchlässig wird. Damit werden derartige
Meßsonden nach kurzer Standzeit unbrauchbar.

Aus diesen Nachteilen ergibt sich infolgedessen die Aufgabe, für die vorliegende Erfindung Meßsonden so auszubilden, daß sie vor den im Inneren des Reaktionsbehälters herrschenden Drücken und Temperaturen geschützt sind.

Diese Aufgabe wird dadurch gelöst, daß eine insbesondere temperaturfeste Abdichtung vorzugsweise im Bereich des Meßfühlers angeordnet wird und eine weitere Abdichtung im Bereich des oberen Endes des Sondenrohres zur Anwendung gelangt, welche zwar druckfest und gasdicht, aber nicht gleichzeitig auch temperaturfest ist. Man behilft sich deshalb in der praktischen Anwendung damit, daß man im Bereich des Meßfühlers eine vorzugsweise hochtemperaturfeste Vergußmasse vorsieht und im Bereich des oberen Endes des Sondenrohres eine vorzugsweise druckfeste und gasichte Vergußmasse anwendet.

Nach einem weiteren Merkmal kann der Innenraum des Sondenrohres zwischen der Abdichtung im Bereich des Meßfühlers und der Abdichtung am oberen aus dem Reaktionsbehälter herausgeführten Ende des Sondenrohres mit einem Medium gefüllt sein, welches über eine Öffnung in der Wand des Sondenrohres mit dem Medium des Reaktionsbehälters in Verbindung steht. Dabei ist es nicht erforderlich, daß dieser Innenraum des Sondenrohres vollständig mit dem erfindungsgemäßen Medium gefüllt ist; vielmehr genügt es, wenn dieses Medium den größten Teil des Innenraumes ausfüllt.

Über die Öffnung in der Wand des Sondenrohres kann dieses Medium austreten und mit dem Medium im Reaktionsbehälter in Verbindung treten, was z. B. notwendig ist, wenn sich das Volumen des Mediums infolge Temperaturerhöhung vergrößert; ebensogut kann aber auch das Medium des Reaktionsbehälters über die Öffnung in der Wand des Sondenrohres in das Innere des Sondenrohres eintreten. Durch diese Kommunikationsöff-

nung wird auf beiden Seiten der den Meßfühler abdichtenden Vergußmasse der gleiche Druck wirksam, so daß diese Abdichtung vollkommen druckentlastet ist. Dabei werden Verlagerungen und/oder Beschädigungen der in dem Meßfühler endenden Spitzen der Meßleitungen ausgeschlossen. Die Temperaturfestigkeit der Vergußmasse in diesem Bereich reicht aus, um die Spitzen der Meßleitungen im Bereich des Meßfühlers in ihrer gegenseitigen Lage zu fixieren.

Es ist erforderlich, daß das den Innenraum des Sondenrohres ausfüllende Medium im wesentlichen druckfest und temperaturbeständig ist, wobei es gleichzeitig auch von dem im Reaktionsbehälter befindlichen Medium unterschiedlich sein kann. Sollte ein Austausch der Medien in der Sonde und im Reaktor dagegen vermieden werde, so muß das die Sonde ausfüllende Medium auch inkompressibel sein. Die Anforderungen an Druckfestigkeit und Temperaturbeständigkeit werden nahezu in idealer Weise von öligen Flüssigkeiten, beispielsweise Mineralölen, erfüllt, während daneben aber auch gasförige Medium zur Ausfüllung des Innenraumes des Sondenrohres in Betracht kommen können.

Da es lediglich erforderlich ist, einen Druckausgleich zwischen dem Inneren des Sondenrohres und dem Inneren des Reaktionsbehälters herbeizuführen, kann die Öffnung in der Wand des Sondenrohres als sehr kleine Bohrung ausgeführt sein, so daß weder wesentliche Mengen des einen Mediums aus dem Inneren des Sondenrohres austreten noch wesentliche Mengen des anderen Mediums aus dem Inneren des Behälters in das Sondenrohr eintreten können. Es ist kaum erforderlich, das einmal in das Sondenrohr eingefüllte Medium zu erneuern, denn die über die Öffnung in der Wand möglichen Verluste sind vernachlässigbar gering und selbst wenn es zu einem völligen Verlust an Medium kommen sollte, würde das Medium aus dem Reaktionsbehälter an dessen Stelle treten und den Innenraum des Sondenrohres ausfüllen, womit wiederum für den Druckausgleich auf beiden Seiten des Meßfühlers Sorge getragen wäre. Daneben ist es auch denkbar, den Innenraum des Sondenrohres mit einem gasförmigen Medium zu füllen oder überhaupt nicht vorzufüllen, denn das über die Wandöffnung aus dem Reaktionsgefäß in das Sondenrohr eintretende Medium würde das gasförmige Medium entsprechend dem vorherrschenden adiabatischen Zustand komprimieren und so im oberen Bereich des Sondenrohres ein Gaspolster aufbauen. Wichtig ist, daß das Sondenende jeweils genügend weit aus dem Reaktor herausragt, damit die Wärmeleitung über die metallische Sondenwandung soweit abgebaut werden kann, daß die obere Abdichtung durch die Reaktortemperaturen nicht beschädigt wird. In einem Reaktor zur Kohleverflüssigung herrschen beispielsweise Temperaturen in der Größenordnung von 500° C und Drücke in der Größenordnung von 300 bar; hier muß ein Sondenrohr von einem üblichen äußeren Querschnittsdurchmesser von 10 mm beispielsweise bis zu 500 mm weit aus dem Reaktor herausgeführt werden.

Weitere Vorteile der Erfindung werden erkennbar an der nachfolgenden Beschreibung eines Ausführungsbeispiels.

Es zeigen:

Fig. 1     ein in einen Reaktionsbehälter hineingeführtes Sondenrohr im Schnitt und

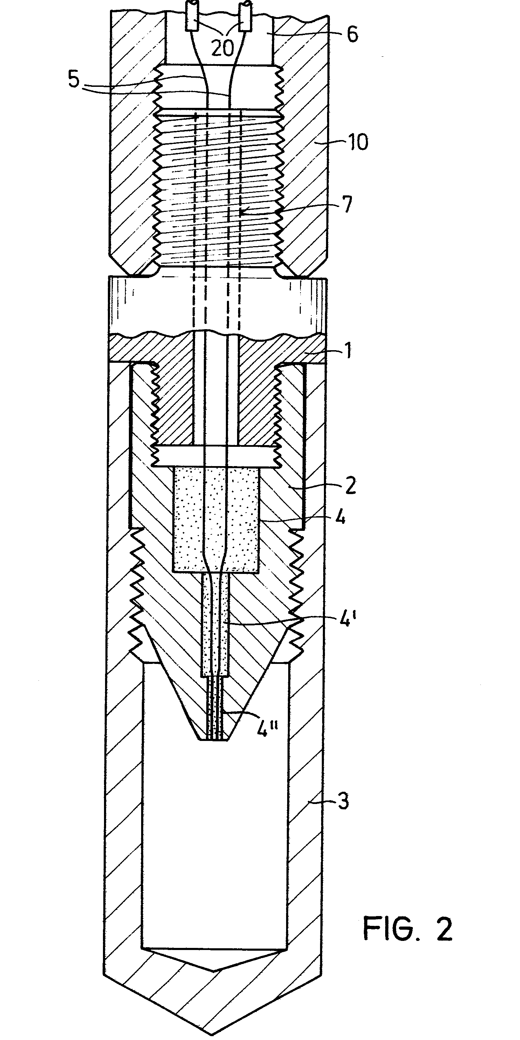

Fig. 2     den Bereich des Meßfühlers des Sondenrohres im vergrößerten Maßstab.

Das Sondenrohr 10 ist im Bereich seines unteren in das Innere 9 eines Reaktionsbehälters 8 hineinragenden Teiles mit einem zweiseitigen Gewindestück 1 verschlossen, welches von einer zentrischen Bohrung 7 in Längsrichtung durchdrungen wird. Auf dem freien Gewinde des Gewindestückes 1 ist der Meßfühler 2 aufgeschraubt, der neben einem passenden Innengewinde noch weitere Bohrungen 4 bis 4'' aufweist, die unterschiedliche Durchmesser haben und in der axialen Längsrichtung des Meßfühlers 2 aufeinanderfolgen.

An seinem äußeren Ende ist der Meßfühler 2 kegelförmig verjüngt; in der Spitze des Kegels endet die feinste Bohrung 4'' der den Meßfühler durchdringenden Bohrungen 4, 4' und 4''.

Die Abstufung der Durchmesser und die Längen dieser Bohrungen 4 im Bereich des Meßfühlers sind so gewählt, daß die Spitzen der über das Sondenrohr 10 und durch die Bohrung 7 herangeführten Meßleitungen 5 erst am äußersten Ende, d. h. im Bereich der feinsten 4''der Bohrungen 4 aneinander angenähert werden, so daß sie in dem davor liegenden Abschnitt und Bereich des Sondenrohres einander nicht beeinflussen können und daneben in ihrer gegenseitigen Lage im Meßfühler sicher und zuverlässig eingebettet sind. Diese Einbettung erfolgt mit Hilfe einer Vergußmasse auf der Basis eines Zweikomponenten-Klebers, wobei die Bohrungen 4, 4' und 4'' vergossen werden, nachdem die Endabschnitte der Meßleitungen 5 in diese Bohrungen 4, 4' und 4'' eingeführt wurden. Die Vergußmasse im Bereich des Meßfühlers zeichnet sich durch besonders hohe Temperaturfestigkeit aus. Sie ist gegegen nicht gleichzeitig auch druckfest und gasdicht.

Zu seinem Schutze vor äußeren Beschädigungen während des Transportes oder Lagerung ist der Meßfühler 2 zusätzlich noch mit einer Schutzhülse 3 umgeben, welche die Kegelspitze des Meßfühlers 2 übergreifend auf diesem aufgeschraubt ist und vor dem Einführen des Sondenrohres in den Reaktionsbehälter 9 entfernt wird.

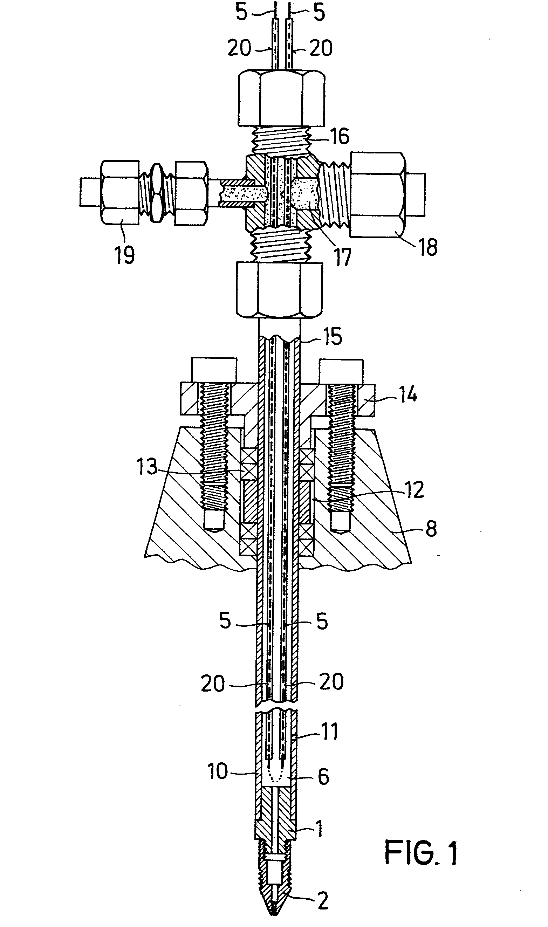

Wie in Fig. 1 erkennbar, wird das Sondenrohr 10 über eine geignete Öffnung 12, die mit Dichtungspackungen 13 und einem Flanschdeckel 14 verfüllt bzw. verschlossen ist, in den Reaktionsbehälter 8 hineingeführt und daselbst in beliebiger Höhe bzw. Tiefe durch Klemmung befestigt.

Der Innenraum 9 des Reaktionsbehälters 8 steht über die Kommunikationsbohrung 11 mit dem Innenraum 6 des Sondenrohres 10 in Verbindung. An seinem oberen, aus dem Reaktionsbehälter 8 herausragenden Ende 15 ist das Sondenrohr 10 von einer Verschraubung 16 verschlossen. Am oberen Ende der Verschraubung 16 sind die Meßleitungen 5 hinausgeführt bzw. kommen von den entsprechenden Meßgeräten oder Generatoren ausgehend dort an. Bei diesen Meßleitungen handelt es sich beispielsweise um Glasfasern zwische 50 und 250 m Durchmesser, bevorzugt von 150 m.

Über die Verschraubung 16 treten die Meßleitungen 5 in den Innenraum 6 des Sondenrohres 10 ein, innerhalb dessen sie jeweils in einem Führungsrohr 20 angeordnet sind, um mit ihren Spitzen wie beschrieben im Meßfühler 2 zu enden.

Die Führungsrohre 20 enden im Bereich der Bohrung 4.

Wie man an dem geschnittenen Teil der Verschraubung 16 in Fig. 1 erkennen kann, ist der Hohlraum 17 der Verschraubung 16 mit einer Vergußmasse verfüllt. Diese Vergußmasse besteht ebenfalls aus einem Zweikomponenten-Kleber, der gegenüber der Vergußmasse in den Bohrungen 4 des Meßfühlers 2 jedoch sich durch eine besonders hohe Druckfestigkeit und Gasdichte auszeichnet. Die rechts und links der Verschraubung 16 erkennbaren Anschlüsse 18 bzw. 19 sind so gewählt, daß bei leicht geöffneter Verschraubung 19 zum Zwecke der Entlüftung über die Verschraubung 18 die Vergußmasse eingeführt bzw. eingespritzt werden kann bis sie den gesamten Hohlraum der

...

Verschraubung 16 porenfrei verfüllt. Nach dem Entlüften über den Anschluß 19 wird der Anschluß 19 geschlossen und ebenso der Anschluß 18 verschlossen. Die Meßleitungen 5 bzw. die sie enthaltenden Führungsrohre 20 sind nunmehr in ihrer gegegenseitigen lage sicher fixiert druckfest und gasdicht im Inneren 17 der Verschraubung 16 eingebettet.

Beim Betrieb wird beispielsweise über den linken Anschluß der Meßleitung 5 ein Laserlicht herangeführt, welches die Meßleitung 5 bis zur engsten Bohrung 4'' des Meßfühlers 2 durchläuft und dort austritt. Solange sich keine Gasblase an der Kegelspitze des Meßfühlers 2 befindet, tritt dieses Laserlicht unreflektiert in das in dem Innenraum 9 des Reaktionsgefäßes 8 befindliche Medium ein und wird von diesem Medium verschluckt. Befindet sich jedoch eine Gasblase an der Spitze des Meßfühlers, wird das durch die Meßleitung 5 herangeführte Laserlicht von der Gasblase zumindest teilweise reflektiert, so daß es in den rechten Strang der Meßleitung 5 in entsprechender Quantität wieder ein und daraus austreten kann. Die Anzahl und Intensität der Reflektionsimpulse sind ein Maßstab für die Menge der in dem Medium des Reaktionsgefässes gelösten Gasphase.

Der Innenraum 6 des Sondenrohres 10 ist mit einem Öl, vorzugsweise einem Mineralöl gefüllt, welches über die Kommunikationsbohrung 11 mit dem Medium im Innenraum 9 des Reaktionsgefäßes 8 in Verbindung steht.

Sobald sich der Druck im Innenraum 9 des Behälters 8 ändert, findet über die Kommunikationsbohrung 11 ein Druckausgleich zwischen dem Innenraum 6 des Sondenrohres 10 und dem Innenraum 9 des Behälers 8 statt. Durch diese Maßnahme wird erreicht, daß auf beiden Seiten des Meßfühlers 2, nämlich sowohl auf Seiten der feinen Bohrung 4'' an dessen kegeliger Spitze als auch auf Seiten der weiten inneren Bohrung 4 der gleiche Druck herrscht. Die in den Bohrungen 4'' befindliche Vergußmasse ist somit druckentlastet und es entstehen keine Kräfte, die die Lage dieser Vergußmasse verändern könnten. Die in die Vergußmasse innerhalb von den Bohrungen 4 eingebettete Enden der Meßleitungen 5 bleiben auf diese Weise von schädigenden mechanischen Einwirkungen verschont.

**DIPL.-ING. HELMUT KOEPSELL**
PATENTANWALT

**5 KÖLN 1**
Mittelstrasse 7
Telefon (02 21) 21 94 23
Telegrammadresse: Koepsellpatent Köln

0110247

Rheinische Braunkohlenwerke AG.

R1/125

Reg.-Nr. bitte angeben

P a t e n t a n s p r ü c h e

================================

1. In einen Reaktionsbehälter einführbares Sondenrohr zur Ermittlung des Betriebszustandes eines festen, flüssigen oder gasförigen Mediums im Inneren des Behälters unter Druck und Temperatur mit einem Meßfühler am unteren Ende des Sondenrohres und durch den Innenraum desselben hindurch und am oberen Ende herausgeführten Meßleitungen, dadurch gekennzeichnet, daß das Sondenrohr (10) mit einer insbesondere temperaturfesten Abdichtung im Bereich des Meßfühlers (2) und mit einer insbesondere druckfesten und gasdichten Abdichtung an dem aus dem Behälter (8) hinausgeführten oberen Ende (15) versehen ist.

2. Sondenrohr nach Anspruch 1, dadurch gekennzeichnet, daß der Innenraum (6) des Sondenrohres (10) zwischen den Abdichtungen mit einem Medium gefüllt ist, welches über eine Öffnung (11) mit dem Medium im Inneren (9) des Reaktionsbehälters (8) in Verbindung steht.

3. Sondenrohr nach Anspruch 1, dadurch gekennzeichnet, daß das Medium im Innenraum (6) des Sondenrohres (10) im wesentlichen druckfest und temperaturbeständig ist und insbesondere von dem Medium innerhalb des Reaktionsbehälters (9) unterschiedlich ist.

4. Sondenrohr nach Anspruch 2, dadurch gekennzeichnet, daß das Medium im Innenraum (6) des Sondenrohres ein Öl, insbesondere Mineralöl ist.

5. Sondenrohr nach Anspruch 1, dadurch gekennzeichnet, daß die Abdichtung im Bereich des Meßfühlers (2) aus einem Zweikomponenten-Kleber besteht, der im wesentlichen temperaturfest ist.

6. Sondenrohr nach Anspruch 1, dadurch gekennzeichnet, daß die Abdichtung (17) an dem aus dem Behälter (8) hinausgeführten Ende (15) des Sondenrohres aus einem Zweikomponenten-Kleber besteht, der im wesentlichen druckfest und gasdicht ist.

0110247

FIG. 1

-2/2-

0110247

FIG. 2

Ri/125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 996 071 (KLICKS et al.) * Figuren 1,2; Spalte 1, Zeile 61 - Spalte 2, Zeile 60 * | 1 | G 01 D 11/30 |
| A | DE-C- 715 975 (I.G. FARBENINDUSTRIE A.G.) * Figuren 1,2; Seite 1, Zeile 25 - Seite 2, Zeile 23 * | 1 | |
| A | US-A-2 012 049 (MERCIER) * Figur 1; Seite 1, linke Spalte, Zeile 1 - rechte Spalte, Zeile 2 * | 2 | |

RECHERCHIERTE SACHGEBIETE (Int. Cl. 3)

G 01 D 11/00
G 01 K 1/00
F 16 J 15/00
C 09 K 3/00
G 12 B 17/00
G 01 K 13/00
G 01 F 1/00
G 01 F 15/00
G 01 N 21/00

Der vorliegende Recherchenbericht wurde für alle Patentansprüche erstellt.

| Recherchenort | Abschlußdatum der Recherche | Prüfer |
|---|---|---|
| DEN HAAG | 24-02-1984 | DRYSDALE N. |